# FASCICULE DE BREVET EUROPEEN

(11) **EP 0 697 682 B1**
(45) Date de publication et mention de la délivrance du brevet: **27.02.2002**
(21) Numéro de dépôt: 95401864.4
(22) Date de dépôt: 09.08.1995
(51) Int. Cl.: G07F 7/08, H04N 1/44

(54) **Dispositif et procédé de sécurisation d'un document et code graphique d'authentification**
Vorrichtung und Verfahren zum Sichern eines Dokumentes sowie graphischer Beglaubigungscode
Document securing apparatus and method; and graphical authentication code

(30) Priorité: 16.08.1994 FR 9410043
(43) Date de publication de la demande: 21.02.1996
(73) Titulaire: FRANCE TELECOM, 75015 Paris (FR); LA POSTE, 92777 Boulogne Billancourt Cédex (FR)
(72) Inventeur: Lepetit, Olivier, F-14170 Saint Pièrre sur Dives (FR); Revillet, Marie-Josèphe, F-14790 Verson (FR)
(74) Mandataire: Dubois-Chabert, Guy

(56) Documents cités:
- EP-A- 0 161 181
- EP-A- 0 600 646
- EP-A- 0 609 142
- WO-A-91/06068
- WO-A-94/07326
- DE-C- 4 003 386
- GB-A- 2 244 625
- US-A- 5 157 726

## Description

### Domaine technique

La présente invention concerne un dispositif et un procédé de sécurisation d'un document et un code graphique d'authentification.

Elle s'applique notamment au stockage sécurisé de documents et à la sécurisation des transmissions par télécopie.

### Etat de la technique antérieure

Dans le domaine des transmissions par télécopie, les points forts sont la simplicité d'emploi, l'utilisation du réseau téléphonique public et la transmission directe. Mais il existe un point faible : la sécurité. Ce dernier point exclut de conférer un statut juridique à un document transmis en télécopie.

La majorité des télécopieurs sont du groupe 3 et ne fonctionnent pas en mode correction d'erreurs. Ces télécopieurs n'assurent aucun niveau d'intégrité. Les altérations peuvent être dues aux bruits de transmission, de scannérisation et d'impression ou bien à des actes délibérés de falsification. Or, pour une transmission par télécopie, l'utilisation d'une signature de type exclusivement électronique sur le fichier bitmap (image scannérisée) pour contrôler l'intégrité n'est pas envisageable. En effet, toute erreur de transmission modifie de manière conséquente la signature. De plus, la non-répudiation a posteriori du document ne peut être alors réalisée qu'à condition de conserver les fichiers binaires des télécopies reçues.

Si l'on utilise deux télécopieurs, fonctionnant en mode caractère, l'emploi d'une signature électronique est possible, car la transmission se fait alors en mode correction d'erreur. Cependant, la vérification de la signature doit se faire à la main avec un terminal adéquat, ce qui constitue une opération longue et fastidieuse.

L'invention a plus généralement pour objet d'assurer l'intégrité d'un document et d'en donner son origine. Elle a également pour objet de rendre plus sûre la transmission de documents par télécopie, pour éviter notamment toute répudiation a posteriori d'un document émis.

Un premier document de l'art antérieur, EP-0 600 646, décrit un document sécurisé, une méthode et un appareil pour produire et authentifier un tel document. Ce document est scruté (ou « scanné ») pour produire un signal numérique qui est comprimé, crypté et codé comme un code à barres à deux dimensions, ou comme toute autre forme appropriée de codage, qui est incorporé dans une étiquette apposée au document. Dans un mode de réalisation le signal représentant l'image est crypté en utilisant un système de cryptage à clé public et la clé est téléchargée à partir d'un centre. Cette clé peut être changée de temps en temps pour augmenter la sécurité. Pour faciliter l'authentification, la clé de décryptage correspondante est cryptée avec une autre clé et incorporée dans une carte. Pour valider le document le signal codé est scruté à partir de l'étiquette, décodé, décrypté, étendu, et affiché. La carte peut alors être authentifiée par comparaison à la représentation affichée de l'image et du document.

Un second document de l'art antérieur, WO 91/06068, décrit un code correcteur d'erreur et détecteur d'erreur optimal. Il divulgue aussi un code graphique d'authentification selon le préambule de la revendication 21.

### Exposé de l'invention

L'invention propose, à cet effet, un dispositif de sécurisation de transmission par télécopie d'un document d'au moins une page, comprenant un module de sécurisation qui calcule un sceau graphique formé de codes à barres pour chaque page de ce document, qui incorpore ce sceau graphique à une page qui est soit ladite page de ce document soit une page supplémentaire "sécuritaire" qui regroupe les sceaux graphiques de toutes les pages du document, caractérisé en ce que ce sceau graphique est formé de codes à barres entrelacés et comprend des espaces et des barres qui forment respectivement des éléments étroits ou larges représentant une information, et en ce que ce sceau graphique est organisé séquentiellement par blocs de n bits et par segments de lignes de code, des marques gauches et droites étant placées en début et en fin de chaque ligne de codes, et des marques intermédiaires étant disposées entre deux segments.

Dans un exemple de réalisation, le module de sécurisation place dans le fichier binaire transmis, représentant une page de ce document, un codage graphique correspondant au sceau.

Dans cet exemple, le dispositif peut comprendre un micro-ordinateur qui calcule et place le sceau graphique au moment de la composition du message. Il peut également comprendre un télécopieur sécurisé avec un module de sécurisation intégré, ou un télécopieur avec un boîtier de sécurisation en série sur la ligne de transmission.

Avantageusement, un module de sécurité est intégré dans le module de sécurisation pour obtenir une signature électronique du message qui est intégrée au codage graphique correspondant au sceau.

Le module de sécurité comporte un lecteur de cartes à mémoire capable de lire une carte à mémoire propre à chaque utilisateur qui possède un code confidentiel permettant d'authentifier celui-ci.

Le dispositif de l'invention comprend alors, du côté récepteur, un module de décodage et de vérification du sceau graphique.

L'invention propose également un procédé de sécurisation de transmission par télécopie d'un document d'au moins une page comportant les étapes suivantes :
- oncalcule un sceau graphique pour chaque page du document,
- on incorpore ce sceau graphique à une page qui est soit ladite page de ce document soit une page supplémentaire "sécuritaire" qui regroupe les sceaux graphiques de toutes les pages du document,
le sceau graphique étant formé de codes à barres entrelacés dans lequel les espaces comme les barres représentent une information, les espaces et les barres formant respectivement des éléments étroits ou larges, et ce sceau graphique étant organisé séquentiellement par blocs de n bits correspondant chacun à un code élémentaire et par segments de lignes de code, des marques gauches et droites étant placées en début et en fin de chaque ligne de codes, et des marques intermédiaires étant disposées entre deux segments.

On obtient le fichier bitmap du document directement ou à partir de la page rescannérisée lors du décodage. Un filtrage morphologique "antibruit" permet d'éliminer sur la partie du fichier bitmap correspondant au sceau graphique les défauts d'image survenus lors de la transmission et/ou de l'impression et/ou du stockage dont la taille est strictement inférieure à la taille des éléments étroits du code-barres.

On effectue, ensuite, une lecture séquentielle du sceau ligne par ligne, segment par segment et de la gauche vers la droite, des marques ajoutées lors de la constitution du sceau permettant de guider la lecture du sceau.

Le décodage du sceau se fait en deux temps : on effectue une lecture graphique de chaque code élémentaire barres + espaces, puis on associe, grâce à la table de vérité du code, les bits correspondants au code élémentaire lu.

En cas de lecture erronée pour les codes élémentaires atteints, la redondance intrinsèque du code permet de lever une ambiguïté et de décoder correctement le code erroné.

En cas d'échec une procédure de traitement d'image va déterminer les longueurs théoriques des barres ou des espaces en fonction des déformations des éléments étroits et larges.

Si l'information sur les éléments étroits et larges n'est pas suffisante, si le code déterminé est impossible, ou s'il y a disparition d'un ou de plusieurs espaces respectivement barres, la procédure de lecture graphique du sceau laisse le code élémentaire barres + espaces indéterminé, le bloc de n bits lié à ce code pouvant prendre toutes les valeurs Cᵢ allant de 0 à 2ⁿ-1, cette indétermination étant levée grâce au code de contrôle placé en fin de chaque segment de ligne de codes.

Cette signature est disposée sur une page supplémentaire qui regroupe les signatures graphiques de toutes les pages d'un même document.

Dans un exemple de réalisation, le document est un document transmis par télécopie.

On utilise une signature électronique du message (M) de la page de télécopie qui met en jeu les informations contenues dans le message, des éléments secrets mémorisés dans une carte à la mémoire en la possession de l'émetteur, un aléa, et l'identité de l'émetteur.

A la réception, on vérifie la cohérence entre les bits du message et les bits d'une signature électronique qui est incorporée au codage graphique. Puis on vérifie la cohérence entre le sceau graphique décodé et l'image reçue en clair.

A la réception, en cas de vérification a posteriori, on réalise une différence "élastique" entre l'image issue du sceau graphique et l'image reçue en clair.

En associant une signature graphique à chaque page de document transmis par télécopie, l'invention permet de sécuriser cette transmission.

Avantageusement, l'invention permet d'assurer l'intégrité d'un document vis-à-vis d'un tiers ou d'un destinataire "non-sécurisé". Elle permet également la non-répudiation en émission. En effet, si le destinataire stocke sur papier le document reçu, le sceau graphique permet d'apporter la preuve de l'origine de la télécopie. De même, toute fraude du récepteur sur le document reçu peut être détectée grâce à la non-cohérence du message et du sceau (non-répudiation en réception).

L'intérêt de l'invention est de permettre un stockage papier de documents de manière sécurisée. Elle convient parfaitement à l'échange de documents par télécopie. L'utilisation de techniques de traitement d'image permet d'associer un sceau graphique à toute page télécopie transmise. Ce sceau garantit l'intégrité du document pendant sa transmission ou son stockage sur papier et en donne son origine.

Selon l'invention, le code ou sceau graphique d'authentification est formé de codes-barres entrelacés dans lesquels les espaces comme les barres représentent une information. Les barres, respectivement les espaces, présentent toujours deux largeurs : large ou étroite. Pour chaque symbole codé le nombre de barres, respectivement d'espaces, larges est constant. Ce sceau graphique est organisé séquentiellement par blocs de n bits correspondant chacun à un code élémentaire barres + espaces et par segments de lignes codes-barres. Des marques gauches et droites sont placées en début et en fin de lignes de codes. Des marques intermédiaires sont disposées entre chaque segment. Un code de contrôle est disposé en fin de chaque segment de ligne de codes-barres.

Ce code est utilisé dans un sceau graphique disposé en un endroit déterminé de l'image. Ainsi, il peut être disposé dans le bas d'une page d'un document.

Avantageusement, le sceau graphique selon l'invention permet de stocker les informations en utilisant un empilement de codes-barres à une dimension.

### Brève description des dessins

- La figure 1 illustre une page de document comprenant un sceau graphique selon l'invention ;
- la figure 2 illustre le dispositif selon l'invention ;
- la figure 3 illustre une variante du dispositif selon l'invention.

### Exposé détaillé de modes de réalisation

L'objet principal de cette invention est d'assurer l'intégrité d'un document et d'en donner son origine, grâce à l'ajout d'un sceau graphique le représentant. Le sceau graphique est obtenu par traitement d'image.

Ce codage graphique d'authentification d'image s'applique par exemple au stockage papier sécurisé d'un document. Une autre application possible est l'échange sécurisé par télécopie de documents. On va à présent décrire, à titre d'exemple, le procédé de codage graphique dans le cas d'un document transmis par télécopie.

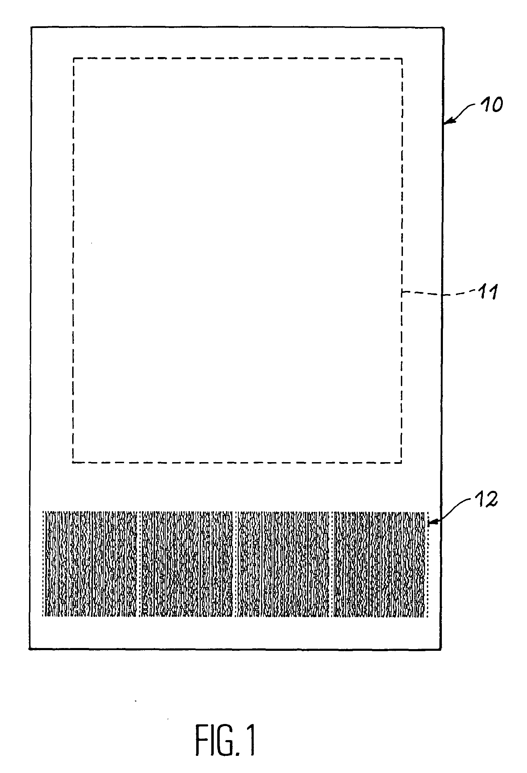

L'invention concerne alors la sécurisation de transmission de documents par télécopie, en associant à chaque page transmise un sceau graphique la représentant. Ce sceau graphique présente une bonne immunité à tous les bruits survenant dans le cas d'un échange télécopie. Il peut être disposé dans un endroit déterminé de la page considérée par exemple dans le bas de celle-ci si celui-ci est libre, ou sinon sur une page supplémentaire (appelée "page sécuritaire") qui regroupe les sceaux graphiques de toutes les pages d'un même document. La figure 1 représente une page 10 de document comprenant une zone 11 contenant le texte de l'information à certifier et le sceau graphique 12.

L'information contenue dans la page télécopie se résume, en effet, à un fichier binaire qui peut être obtenu de deux façons :
- dans le cas d'une composition sur micro-ordinateur, on recueille les codes ASCII des caractères frappés sur le clavier de l'ordinateur. Les codes sont ensuite convertis en éléments binaires ;
- lorsqu'il s'agit d'une télécopie papier déjà formée, le fichier bitmap de la zone à certifier (message M) issu de la scannérisation est comprimé selon les codages classiques en télécopie, fournissant ainsi un fichier binaire utilisable.

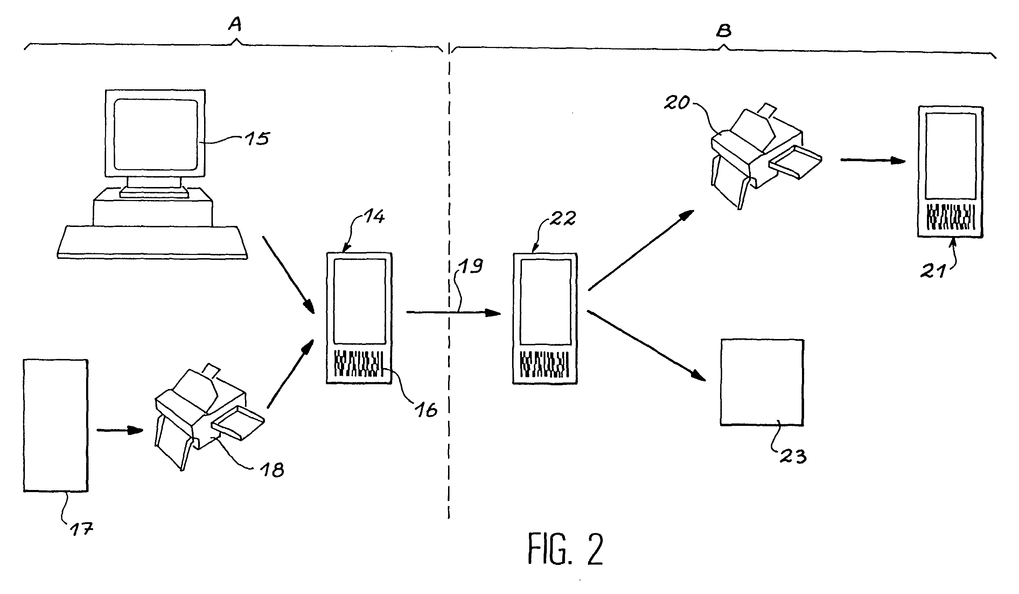

Ainsi, dans le procédé de l'invention, comme représenté sur la figure 2 du côté émetteur A :
- soit la télécopie 14 est composée à partir d'un micro-ordinateur 15 qui calcule et place le sceau graphique 16 au moment de la composition du message. La télécopie est envoyée directement si l'émetteur dispose d'une carte d'émission de télécopie ou carte "fax add-on" pour micro-ordinateur. Sinon elle est imprimée et un télécopieur classique non sécurisé peut être utilisé pour l'émission. La télécopie ne contient que du texte dactylographié, les logos et/ou figures intégrées ne peuvent alors pas faire partie de la zone qui est certifiée ; on utilise, en effet, directement les bits des codes ASCII frappés ;
- soit la télécopie 17 existe déjà sur papier, il faut alors utiliser un télécopieur 18 nouvelle génération avec un module de sécurisation intégré, ou utiliser un boîtier de sécurisation en série sur la ligne téléphonique. Le module de sécurisation (intégré ou pas) détermine et place dans le fichier bitmap du document (fichier issu de la scannérisation) le sceau graphique de la page. Cette configuration permet l'envoi de n'importe quel type de message (texte dactylographié/manuscrit, photographie, plan...).

Le module de sécurisation est inclus soit dans le télécopieur, soit dans un boîtier séparé, soit dans le micro-ordinateur. Un module de sécurité intégré au système de sécurisation permet d'obtenir une signature électronique du message qui est incorporée au codage graphique.

Ce module de sécurité comporte un lecteur de cartes à mémoire capable de lire une carte à mémoire propre à chaque utilisateur. L'utilisateur désirant émettre une télécopie sécurisée doit insérer sa carte à mémoire contenant ses clés afin qu'elle calcule la signature.

Du côté récepteur B, tout télécopieur 20 peut être utilisé pour obtenir un document 21 correspondant au document 22 reçu de la ligne de transmission 19. Néanmoins, si le récepteur B veut vérifier lui-même l'intégrité du document et son origine, il doit disposer d'une machine contenant un module de sécurisation. Cette vérification peut être faite au moment de la réception, mais aussi a posteriori : le récepteur devant alors rescannériser le document papier qu'il a conservé. Si le récepteur B ne possède pas de télécopieur sécurisé, il peut demander à un serveur 23 de faire la vérification de l'intégrité du document et prouver son origine. Le récepteur scannérise alors la page papier reçue et transmet le fichier bitmap par télécopie au serveur. Le serveur possède un module de décodage et de vérification du sceau graphique. Une autre solution pour B est d'utiliser un autre télécopieur qui, lui, est sécurisé.

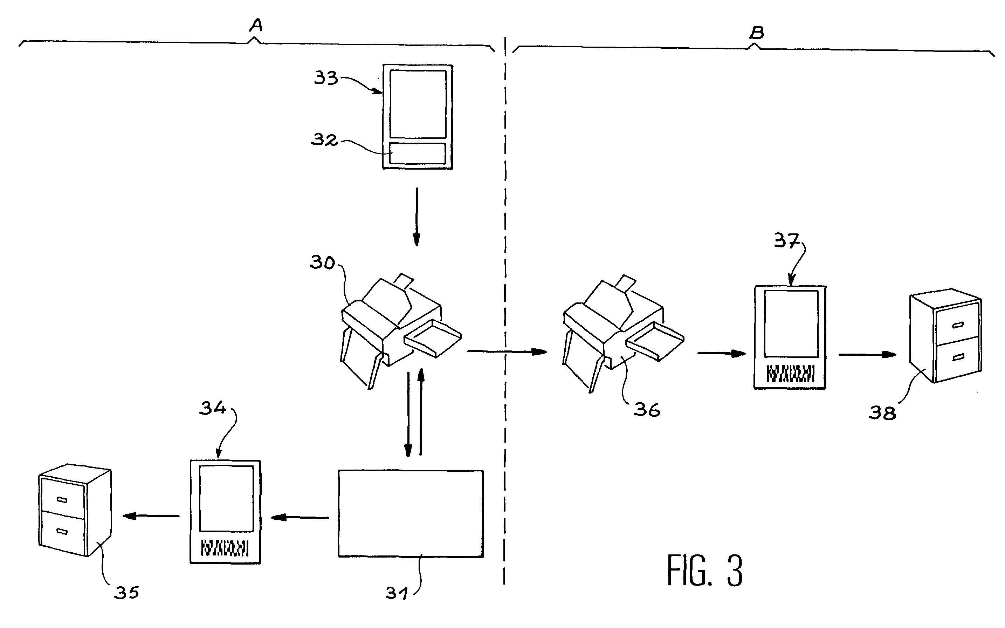

Comme représenté sur la figure 3, si l'émetteur A ne dispose que d'un fax standard 30, il peut faire appel à un serveur 31. Dans ce cas A est abonné à un service lui fournissant un lot d'étiquettes code-barres autocollantes. Chaque étiquette contient de manière codée son identité et une valeur s'incrémentant d'une étiquette à l'autre comme un compteur. Le compteur présente une période longue pour éviter la fraude.

L'émetteur A colle une étiquette graphique personnalisée 32 contenant son identité sur le document 33 et envoie la page ainsi formée au serveur. Le serveur 31, qui dispose d'un module de sécurisation, identifie le demandeur et calcule la signature électronique du message. En effet, le serveur dispose des clés de tous les utilisateurs abonnés au service. Dans un deuxième temps, le serveur 31 détermine et place le sceau graphique de la page dans le fichier bitmap. Le serveur renvoie alors la page sécurisée 34 à l'utilisateur A. Le serveur peut imprimer la page sécurisée et la stocker (35) pour une notarisation éventuelle demandée par A. Enfin, l'émetteur A imprime le document certifié puis l'envoie au récepteur B via son fax standard 36.

Le document reçu 37 peut alors être stocké (38).

### Altérations dues à l'échange de documents par télécopie

L'échange d'une page télécopie implique des altérations ou effets de bruit. Différentes configurations peuvent se présenter.

Du côté émetteur A, comme décrit précédemment, s'il s'agit d'une composition sur micro-ordinateur, soit celui-ci dispose d'une carte "fax add-on" et peut envoyer directement le fichier électronique, correspondant au message composé, sur la ligne téléphonique, soit il n'en dispose pas et doit imprimer le document sur papier qui est scannérisé par son télécopieur. S'il s'agit d'un document sous forme papier, il subit une scannérisation par le télécopieur émetteur avant envoi.

Du côté récepteur B, les effets dus aux bruits de transmission sont communs à toutes les configurations. Seuls ces bruits interviennent dans le cas d'une vérification "on line", car le fichier bitmap est disponible directement. Pour une vérification a posteriori réalisée par le récepteur B, celui-ci doit imprimer la télécopie au moment de la réception, la stocker et la rescannériser au moment de la vérification. Pour une vérification effectuée par un serveur, il faut en plus que le récepteur B transmette par télécopie le document rescannérisé.

Le bruit dû à la transmission se résume à quelques lignes adjacentes erronées sur fichier bitmap d'arrivée. Les bruits de scannérisation sont : des translations, des rotations, des mauvaises scannérisations, des lettres peu contrastées... L'impression entraîne des déformations locales de l'image (l'encre bave). Les bruits papier lors du stockage sont des taches de taille, de forme et de position variables. Ainsi, le fichier bitmap d'une page télécopie côté récepteur peut s'avérer sensiblement dégradé par rapport au fichier bitmap initial émis.

L'invention permet d'utiliser une représentation de la page télécopie invariante aux effets de scannérisation, de transmission, de stockage et d'impression, en utilisant un procédé de codage graphique de l'image robuste vis-à-vis du bruit. On utilise une représentation facile à relire après transmission et rescannérisation de la page. La représentation graphique considérée est du type code-barres à deux dimensions et présente une bonne immunité à tous les bruits survenant dans le cas d'un échange télécopie.

Les effets de bruit liés à la transmission par fax sont importants (taches, traits, pliures,...). La représentation graphique appliquée à la télécopie est donc utilisable dans un cadre plus général, lorsque l'on veut authentifier une image sans transmission.

### Zone de signature graphique

Si on veut certifier une télécopie papier déjà formée et que le bas de page libre est suffisamment haut, le sceau graphique y est placé. Dans le cas contraire, on met le sceau graphique sur une page supplémentaire (appelée page sécuritaire) qui regroupe les sceaux graphiques de toutes les pages d'un document.

### Fichier binaire

L'information contenue dans la page télécopie se résume à un fichier binaire qui peut être obtenu de deux façons.

Dans le cas d'une composition sur micro-ordinateur, on recueille les codes ASCII des caractères frappés sur le clavier de l'ordinateur. Les codes sont ensuite convertis en éléments binaires (bits).

Lorsqu'il s'agit d'une télécopie papier déjà formée, le fichier bitmap de la zone à certifier (message M) issu de la scannérisation est comprimé selon les codages classiques en télécopie, fournissant ainsi un fichier binaire utilisable.

### Sécurité

Avant de passer au codage graphique proprement dit, on fait intervenir la sécurité : on peut ajouter aux bits correspondant au message M de la page télécopie, la signature électronique de ce message.

Il n'y a pas de contrainte particulière sur la signature électronique puisque l'utilisateur peut envoyer facilement des informations au récepteur concernant ses éléments sécuritaires.

La signature électronique du message M met en jeu les informations contenues dans le message, des éléments secrets mémorisés dans une carte à mémoire en la possession de l'émetteur, un aléa (la date-heure par exemple pour éviter tout "rejeu", le rejeu étant une fraude consistant à réémettre, parfois à l'insu du véritable émetteur, un document vers un même destinataire sans que celui-ci ne puisse s'en apercevoir) et l'identité de l'émetteur. La carte à mémoire possède un code confidentiel permettant d'authentifier son propriétaire légitime. La signature électronique S(M) du message M, obtenue par un procédé de cryptographie classique, est vérifiable par la carte du récepteur s'il est sécurisé.

### Codage graphique

Le message M et sa signature électronique S(M) forment une série binaire. Cette série binaire est alors codée sous forme de codes-barres. Il s'agit d'un code-barres entrelacé dans lequel les espaces comme les barres représentent une information. Les barres (respectivement les espaces) présentent toujours deux largeurs : large ou étroite. Pour chaque symbole codé le nombre de barres (respectivement espaces) larges est constant. Par exemple "le code deux parmi cinq entrelacé" combine cinq éléments (barres ou espaces) dont deux sont toujours larges. La largeur du code est donc fixe par exemple cinq barres et cinq espaces. Chaque code élémentaire (barres + espaces) permet de coder un bloc de n bits, ainsi le code "deux parmi cinq entrelacé" peut coder un nombre sur six bits. Le codage de la série binaire s'effectue donc par tranche de n bits: n/2 bits pour les barres et n/2 pour les espaces. Les dimensions des symboles peuvent être par exemple de 7/8 mm de haut, 3/8 mm de large pour les éléments étroits et 6/8 mm de large pour les éléments larges.

La zone graphique est organisée séquentiellement par bloc de n bits (code élémentaire barres + espaces) et par lignes de codes-barres. Enfin, des marques gauche et droite, utiles lors de la relecture des codes-barres, sont placées en début et fin de ligne de codes. Pour s'affranchir des déformations curvilignes survenant dans la pratique (une ligne horizontale est transformée en une ligne courbe), la zone graphique est divisée en largeur en plusieurs segments par exemple quatre. Entre chaque segment on place des marques intermédiaires remplissant la même fonction que les marques gauches et droites. Une ligne de codes-barres est ainsi composée de quatre segments de ligne graphique.

Pour assurer une importante immunité au bruit de la zone graphique, on ajoute en fin de chaque segment de ligne codes-barres un code de contrôle (par exemple la somme des nombres représentés sur le segment de ligne) dont les bits sont également représentés en codes-barres. Ce code permet de corriger, lors de la lecture de la ligne, des erreurs graphiques sur les codes-barres élémentaires.

Cette zone graphique est incorporée au fichier bitmap de la page ou du document de telle manière qu'on puisse transmettre le fichier obtenu selon le protocole télécopie.

### Décodage

Pour le décodage, la procédure inverse est menée. L'élément de travail est le fichier bitmap de l'image, celui-ci est reçu directement, ou bien obtenu à partir de la page rescannérisée dans le cas d'un contrôle a posteriori.

Un filtrage morphologique "antibruit" permet d'éliminer sur la partie du fichier bitmap correspondant au sceau graphique les défauts d'image survenus lors de la transmission et/ou de l'impression et/ou du stockage (tache, traits, pliures, ...) dont la taille est strictement inférieure à la taille des éléments étroits du code-barres.

Une fois cette opération réalisée, on effectue une lecture séquentielle du sceau ligne par ligne, segment par segment et de la gauche vers la droite. Les marques ajoutées lors de la constitution du sceau permettent de guider la lecture de la zone graphique. Le décodage du sceau se fait en deux temps : on effectue une lecture graphique de chaque code-barres élémentaire (par exemple cinq barres et cinq espaces), puis on associe, grâce à la table de vérité du code, les bits correspondants au code élémentaire lu. Par exemple, les cinq barres d'un code élémentaire induisent trois bits et les cinq espaces trois autres bits.

Dans le cas d'une vérification a posteriori, la page télécopie est imprimée puis scannérisée ultérieurement. Les effets dus au bruit sont alors sensibles sur le sceau graphique. Les longueurs des éléments barres ou espaces subissent des déformations algébriques allant pour les télécopies très bruitées jusqu'à la disparition de certains éléments étroits. Ceci induit une lecture erronée pour les codes-barres élémentaires atteints. La redondance intrinsèque du code (présence de deux larges sur cinq éléments par exemple) permet dans certains cas de lever une ambiguïté et de décoder correctement le code erroné. En cas d'échec une procédure de traitement d'image va déterminer les longueurs théoriques des barres ou des espaces en fonction des déformations des éléments duaux.

Par exemple, lorsque les barres se dilatent, elles le font au détriment des espaces dont les longueurs peuvent être alors affectées sensiblement. Grâce à la connaissance des positions des barres larges (éléments duaux), la procédure peut calculer les longueurs théoriques des barres. Elle peut ainsi déterminer la déformation algébrique subie par chaque espace à partir des déformations des deux barres encadrantes. On restitue ainsi la longueur théorique des espaces.

Si l'information sur les éléments duaux n'est pas suffisante ou si le code déterminé est impossible (par exemple trois larges trouvés sur cinq éléments), la procédure de lecture graphique du sceau laisse le code-barres élémentaire indéterminé. Cela signifie que le bloc de n bits lié à ce code-barres peut prendre toutes les valeurs Cᵢ allant de 0 à 2ⁿ-1. Cette indétermination sera levée grâce au code de contrôle placé en fin de chaque segment de ligne codes-barres. En effet, seul le nombre Cᵢ exact fera correspondre la série de nombres lus sur tout le segment de la ligne graphique avec le code de contrôle de cette ligne. Dans le cas de la disparition d'un ou plusieurs espaces (respectivement barres), le même type de procédure est activé.

### Vérification

On doit alors vérifier la cohérence entre les bits du message M et les bits de la signature électronique S(M). En effet, la signature électronique calculée par la carte à mémoire de l'émetteur est vérifiable par la carte à mémoire du récepteur ou par le serveur. En cas de succès, la deuxième étape consiste à vérifier la cohérence "graphique" entre l'image décodée à partir du sceau et l'image reçue en clair de la zone certifiée. En cas de non cohérence, la télécopie est considérée comme non intègre.

S'il s'agit d'une composition réalisée à partir d'un micro-ordinateur, l'algorithme détermine à partir des bits lus dans la zone graphique les codes ASCII et redonne les caractères correspondants. Le récepteur B ne dispose pas forcément de la police de caractères utilisée par l'émetteur, aussi les caractères issus du sceau graphique apparaissent dans un type choisi par B. Le récepteur ou le serveur (vérification a posteriori) imprime ou visualise sur un écran les caractères décodés et l'opérateur les compare visuellement au message contenu en clair sur la page télécopie reçue. Le codage graphique étant bijectif, on peut repérer tout défaut d'intégrité sur la télécopie par non-cohérence entre l'image et le sceau.

Dans le cas d'un sceau graphique représentant le fichier bitmap de la page, le fichier binaire M obtenu après lecture doit être décompacté (décompactage classique en télécopie) pour fournir le fichier bitmap de l'image envoyée.

En effet, dans une opération de compactage après avoir réduit l'image à une résolution 1/4, 1/4 (1 pixel sur 4 en hauteur, 1 pixel sur 4 en largeur), en évitant de retirer les motifs isolés, par exemple, avec la méthode JBIG, le fichier est comprimé par un codage réversible utilisé en télécopie, à savoir le codage "T4" ou "T6" par exemple.

L'image reçue en clair par le récepteur est assez peu bruitée dans le cas d'une vérification à la réception ("on line"), par contre elle l'est fortement dans le cas d'une vérification a posteriori. Ceci est dû à l'impression sur papier de l'image et de sa rescannérisation ultérieure après stockage. Ainsi, l'image issue de la zone graphique et celle reçue ne correspondent pas pixels à pixels à cause des déformations et altérations dues aux bruits.

En conséquence, on réalise par exemple une différence dite "élastique" entre l'image issue du sceau graphique et le fichier bitmap reçu en clair sur papier. Cette procédure permet de tolérer des déformations locales entre deux images. Seule une fraude sur le texte de la télécopie induit une différence élevée.

Une telle différence est basée sur un algorithme de programmation dynamique qui cherche à minimiser la distance entre les deux images, comme décrit dans l'article de S. Duval, R. Collot, M. Achemlal intitulé "Comparison of two images by dynamic programming" (publié dans IEEE International Conference on Image Processing ; 5-8 septembre 1989). La procédure permet ainsi de pouvoir comparer deux images de forme générale semblable, les seules différences acceptées étant des déformations locales et des translations. En effet, à un pixel (i, j) de la première image, l'algorithme associe le pixel de la seconde image appartenant au voisinage du pixel (i, j) tel que la distance entre les deux pixels soit minimum.

Dans un souci de simplicité, la comparaison entre les deux images peut être réalisée visuellement par le récepteur ou le serveur, qui imprime ou affiche sur écran le résultat de l'image contenue dans la zone graphique. Les performances du système oeil-cerveau permettent à l'opérateur de rejeter des déformations ou des défauts mineurs imputables aux bruits. Par contre, tout acte de falsification par un tiers (défaut d'intégrité) ou par le destinataire fraudeur (contrôle ultérieur) est facilement repérable.

Le serveur dont il est question ci-dessus peut jouer une fonction de "notaire" électronique qui comprend un terminal informatique possédant une liaison télécopie. Un tel serveur est nécessaire dès lors que le récepteur n'est pas sécurisé pour permettre une vérification a posteriori. Il effectue alors des services d'archivage et d'horodatage. Il peut assurer un "accusé de réception" du côté destinataire.

L'invention permet ainsi de vérifier l'intégrité d'une image ou d'un document, et d'éviter la répudiation d'un document reçu par télécopie.

Les services de sécurité développés ici pour la télécopie sont tout à fait transposables dans le cas général d'un codage graphique d'authentification d'images.

### Intégrité

En ce qui concerne l'intégrité, une télécopie, peut, en effet, subir des modifications malveillantes durant sa transmission ou son stockage côté destinataire. Pour la vérification de l'intégrité, on dispose comme support numérique du fichier bitmap de la page (directement pour une vérification "on line" ou obtenu après rescannérisation pour une vérification a posteriori). On lit le sceau, on vérifie la signature électronique S(M), puis on regarde la cohérence de l'image issue du sceau graphique avec l'image reçue. Tout défaut d'intégrité du document reçu est détecté grâce à la non-conformité de la signature S(M) et du message M et/ou de la non-conformité du message en clair M et du sceau. Par exemple, le récepteur fraudeur B ne peut modifier le message M et son sceau de manière cohérente. En effet, s'il modifie M en M1, il peut accéder à la série binaire de M1, mais il ne peut obtenir la signature S(M1) réalisée avec la clé secrète de l'émetteur. Dans ce cas, le résultat de la vérification de la signature électronique est mauvais. Ceci interdit à B l'accès au sceau graphique correspondant à M1. L'opération symétriquement inverse qui consiste à trouver le message M' à partir d'une signature S(M') échoue pour la même raison. L'algorithme de vérification détecte ainsi tout défaut d'intégrité du document. On voit ici l'analogie avec un sceau physique placé sur une lettre.

### Non répudiation

En ce qui concerne la non répudiation, on se place dans le cas d'un contrôle différé et d'un stockage sur papier. La première étape consiste à vérifier la signature électronique S(M) contenue dans la représentation graphique. L'identité de l'émetteur est alors prouvée. On retrouve l'analogie avec un sceau placé sur un document papier donnant l'identité de l'émetteur. Il faut ensuite vérifier la conformité du message binaire M et de la signature et la correspondance entre le codage graphique et l'image reçue. En cas de résultat positif, l'émetteur ne peut répudier le document présenté par le récepteur devant une autorité juridique. Dans le cas d'un destinataire malhonnête qui falsifie dans son intérêt la télécopie reçue, l'émetteur peut demander à un juge de vérifier l'intégrité du document présenté par le récepteur. La vérification indique alors une non-cohérence entre le sceau graphique et le message. Le destinataire ne peut, en effet, imiter le sceau de l'émetteur.

L'intérêt de cette invention est de permettre l'authentification d'une image ou d'un document par adjonction d'un sceau graphique. L'utilisation de techniques de traitement d'image permet d'associer à toute page d'un document un sceau graphique composé de codes-barres entrelacés. Ce sceau graphique garantit l'intégrité du document et en donne son origine.

On a décrit le procédé de codage graphique dans le cadre d'un échange de documents par télécopie, directement entre deux télécopieurs ou bien en faisant appel à un serveur. Cependant, l'invention est plus générale et peut s'appliquer à d'autres cas. Le code graphique permet par exemple le stockage papier de documents de manière sécurisée. Une autre application est la copie certifiée de documents.

## Revendications

1. Dispositif de sécurisation de transmission par télécopie d'un document d'au moins une page (10, 14), comprenant un module de sécurisation qui calcule un sceau graphique (12, 16) formé de codes à barres pour chaque page de ce document, qui incorpore ce sceau graphique à une page qui est soit ladite page de ce document soit une page supplémentaire "sécuritaire" qui regroupe les sceaux graphiques de toutes les pages du document, **caractérisé en ce que** ce sceau graphique (12, 16) est formé de codes à barres entrelacés et comprend des espaces et des barres qui forment respectivement des éléments étroits ou larges représentant une information, et **en ce que** ce sceau graphique est organisé séquentiellement par blocs de n bits et par segments de lignes de code, des marques gauches et droites étant placées en début et en fin de chaque ligne de codes, et des marques intermédiaires étant disposées entre deux segments.

2. Dispositif selon la revendication 1, **caractérisé en ce que** le module de sécurisation place dans le fichier binaire (10) transmis, représentant une page de ce document, un codage graphique correspondant au sceau.

3. Dispositif selon la revendication 1, **caractérisé en ce qu'**il comprend un micro-ordinateur (15) qui calcule et place le sceau graphique (16) au moment de la composition du message.

4. Dispositif selon la revendication 1, **caractérisé en ce qu'**il comprend un télécopieur sécurisé (18) avec un module de sécurisation intégré.

5. Dispositif selon la revendication 1, **caractérisé en ce qu'**il comprend un télécopieur avec un boîtier de sécurisation en série sur la ligne de transmission.

6. Dispositif selon l'une quelconque des revendications précédentes, **caractérisé en ce qu'**un module de sécurité est intégré dans le module de sécurisation pour obtenir une signature électronique du message qui est intégrée au codage graphique correspondant au sceau.

7. Dispositif selon la revendication 6, **caractérisé en ce que** le module de sécurité comporte un lecteur de cartes à mémoire capable de lire une carte à mémoire propre à chaque utilisateur qui possède un code confidentiel permettant d'authentifier celui-ci.

8. Dispositif selon la revendication 1, **caractérisé en ce que**, du côté récepteur (B), il comprend un module de décodage et de vérification du sceau graphique.

9. Procédé de sécurisation de transmission par télécopie d'un document d'au moins une page, comportant les étapes suivantes :
- on calcule un sceau graphique pour chaque page du document,
- on incorpore ce sceau à une page transmise qui est soit ladite page du document soit une page supplémentaire "sécuritaire" qui regroupe les sceaux graphiques de toutes les pages du document,
le sceau graphique (12;16) étant formé de codes à barres entrelacés dans lequel les espaces comme les barres représentent une information, les espaces et les barres formant respectivement des éléments étroits ou larges, et ce sceau graphique étant organisé séquentiellement par blocs de n bits correspondant chacun à un code élémentaire barres + espaces et par segments de lignes de codes, des marques gauches et droites étant placées en début et en fin de chaque ligne de codes, et des marques intermédiaires étant disposées entre deux segments.

10. Procédé selon la revendication 9, **caractérisé en ce qu'**on obtient le fichier bitmap du document directement ou à partir de la page rescannérisée.

11. Procédé selon la revendication 9, **caractérisé en ce que**, lors du décodage, un filtrage morphologique "antibruit" permet d'éliminer sur la partie du ficher bitmap correspondant au sceau graphique les défauts d'image survenus lors de la transmission et/ou de l'impression et/ou du stockage dont la taille est strictement inférieure à la taille des éléments étroits du code-barres.

12. Procédé selon la revendication 11, **caractérisé en ce qu'**on effectue, ensuite, une lecture séquentielle du sceau ligne par ligne, segment par segment et de la gauche vers la droite, les marques ajoutées lors de la constitution du sceau permettant de guider la lecture du sceau.

13. Procédé selon la revendication 9, **caractérisé en ce que** le décodage du sceau se fait en deux temps : on effectue une lecture graphique de chaque code élémentaire barres + espaces, puis on associe, grâce à la table de vérité du code, les bits correspondants au code élémentaire lu.

14. Procédé selon la revendication 9, **caractérisé en ce qu'**en cas de lecture erronée pour les codes élémentaires barres + espaces atteints, la redondance intrinsèque du code permet de lever une ambiguïté et de décoder correctement le code erroné.

15. Procédé selon la revendication 14, **caractérisé en ce qu'**en cas d'échec une procédure de traitement d'image va déterminer les longueurs théoriques des barres ou des espaces en fonction des déformations des éléments étroits et larges.

16. Procédé selon la revendication 9, **caractérisé en ce que** si l'information sur les éléments étroits et larges n'est pas suffisante, si le code déterminé est impossible, ou s'il y a disparition d'un ou de plusieurs espaces, respectivement barres, la procédure de lecture graphique du sceau laisse le code élémentaire barres + espaces indéterminé, le bloc de n bits lié à ce code pouvant prendre toutes les valeurs Ci allant de 0 à 2ⁿ-1, cette indétermination étant levée grâce au code de contrôle placé en fin de chaque segment de ligne de codes.

17. Procédé selon la revendication 9, **caractérisé en ce qu'**on utilise une signature électronique du message (M) de la page de télécopie qui met en jeu les informations contenues dans le message, des éléments secrets mémorisés dans une carte à mémoire en la possession de l'émetteur, un aléa, et l'identité de l'émetteur.

18. Procédé selon la revendication 17, **caractérisé en ce que** l'on vérifie la cohérence entre les bits du message et les bits d'une signature électronique qui est incorporée au codage graphique.

19. Procédé selon la revendication 18, **caractérisé en ce qu'**on vérifie la cohérence entre le sceau graphique décodé et l'image reçue en clair.

20. Procédé selon la revendication 19, **caractérisé en ce qu'**à la réception en cas de vérification a posteriori, on réalise une différence "élastique" entre l'image issue du sceau graphique et l'image reçue en clair.

21. Code graphique d'authentification, formé de codes à barres entrelacés dans lesquels les espaces comme les barres représentent une information ; les espaces et les barres présentant toujours deux largeurs : large ou étroite, et dans lequel pour chaque symbole codé le nombre de barres, respectivement d'espaces, larges est constant, **caractérisé en ce qu'**il est organisé séquentiellement par blocs de n bits correspondant chacun à un code élémentaire barres + espaces et par segments de lignes codes-barres, **en ce que** des marques gauches et droites sont placées en début et en fin de chaque ligne de codes, **en ce que** des marques intermédiaires sont disposées entre deux segments, et **en ce qu'**un code de contrôle est disposé en fin de chaque segment de ligne de codes-barres.

## Claims

1. Device for securizing the transmission by fax of a document having at least one page (10, 14), comprising a securizing module which calculates a graphic seal (12, 16) formed from bar codes for each page of said document, which incorporates said graphic seal in a page, which is either said page of said document, or a supplementary "security" page grouping the graphic seals of all the pages of the document, **characterized in that** the graphic seal (12, 16) is formed from interlaced bar codes and which has spaces and bars respectively forming narrow or wide elements representing an information, and **in that** said graphic seal is sequentially organized in blocks of n bits and segments of code lines, left and right-hand marks being placed at the start and finish of each code line and intermediate marks being positioned between two segments.

2. Device according to claim 1, **characterized in that** the securizing module places in the transmitted binary file (10), representing a page of said document, a graphic coding corresponding to the seal.

3. Device according to claim 1, **characterized in that** it incorporates a microcomputer (15), which calculates and positions the graphic seal (16) at the time of composing the message.

4. Device according to claim 1, **characterized in that** it incorporates a securized fax machine (18) with an integrated securizing module.

5. Device according to claim 1, **characterized in that** it incorporates a fax machine with a securizing box in series on the transmission line.

6. Device according to any one of the preceding claims, **characterized in that** a security module is integrated into the securizing module in order to obtain an electronic signature of the message integrated into the graphic coding corresponding to the seal.

7. Device according to claim 6, **characterized in that** the security module comprises a smart card reader able to read a smart card individual to each user, who has a confidential code permitting the authentification thereof.

8. Device according to claim 1, **characterized in that**, on the recipient (B) side, it has a module for decoding and verifying the graphic seal.

9. Process for securizing transmission by fax of a document having at least one page involving the following stages:
- a graphic seal is calculated for each page of the document,
- said graphic seal is incorporated into a page, which is either said page of said document, or a supplementary "security" page grouping the graphic seals of all the pages of the document,
- the graphic seal (12, 16) being formed from interlaced bar codes in which the spaces and the bars represent an information, the spaces and bars respectively forming narrow or wide elements, said graphic seal being sequentially organized in blocks of n bits, each corresponding to an elementary code and in code line segments, left and right-hand marks being placed at the start and finish of each code line and intermediate marks being placed between two segments.

10. Process according to claim 9, **characterized in that** the bit map file of the document is obtained directly or from the rescanned page.

11. Process according to claim 9, **characterized in that**, during decoding, an "anti-noise" morphological filtering makes it possible to eliminate on that part of the bit map file corresponding to the graphic seal, the image defects which have occurred during transmission and/or printing and/or storage, whose size is strictly smaller than the size of the narrow elements of the bar code.

12. Process according to claim 11, **characterized in that** there is then a sequential reading of the seal line by line, segment by segment and from left to right, marks added during the formation of the seal make it possible to guide the seal reading.

13. Process according to claim 9, **characterized in that** the decoding of the seal takes place in two stages, namely a graphic reading of each elementary code of bars and spaces and then, as a result of the truth table of the code, the corresponding bits are associated with the elementary code read.

14. Process according to claim 9, **characterized in that** in the case of erroneous reading for the elementary codes of bars and spaces reached, the intrinsic redundancy of the code makes it possible to remove an ambiguity and directly decode the erroneous code.

15. Process according to claim 14, **characterized in that** in the case of a failure an image processing procedure will determine the theoretical lengths of the bars or spaces as a function of deformations of the narrow and wide elements.

16. Process according to claim 9, **characterized in that** if the information on the narrow and wide elements is not adequate, if the determined code is impossible, or if there is a disappearance of one or more spaces or bars, the seal graphic reading procedure leaves the elementary code of bars and spaces indeterminate, the block of n bits linked with said bar code being able to assume all values Cᵢ from 0 to 2ⁿ⁻¹, said indetermination being removed by means of the check code placed at the end of each code line segment.

17. Process according to claim 9, **characterized in that** use is made of an electronic signature of the message (M) of the faxed page using the informations contained in the message, secret elements stored in a smart card in the possession of the sender, a random variable and the identity of the sender.

18. Process according to claim 17, **characterized in that** the consistency between the bits of the message and the bits of an electronic signature is verified.

19. Process according to claim 18, **characterized in that** the consistency between the decoded graphic seal and the image received in uncoded form is verified.

20. Process according to claim 19, **characterized in that** on reception in the case of a posteriori verification, an "elastic" difference is formed between the image from the graphic seal and the image received in uncoded form.

21. Authentication graphic code, formed from interlaced bar codes, in which the spaces and bars represent an information, the spaces and bars always having two widths: wide or narrow, and in which for each coded symbol the number of bars, respectively spaces, in wide form is constant, **characterized in that** it is sequentially organized in blocks of n bits, each corresponding to an elementary code of bars and spaces and bar code line segments, **in that** left and right-hand marks are placed at the start and finish of each code line, **in that** intermediate marks are placed between two segments and **in that** a check code is placed at the end of each bar code line segment.

## Patentansprüche

1. Vorrichtung zum Sichern der Übertragung eines Dokuments mit wenigstens einer Seite (10, 14) durch Telekopie, einen Sicherungsmodul umfassend, der ein graphisches Siegel (12, 16) berechnet, gebildet durch Strichcodes für jede Seite dieses Dokuments, das dieses Siegel auf einer Seite enthält, die entweder die genannte Seite dieses Dokuments ist, oder eine zusätzliche "Sicherungsseite", die die graphischen Siegel aller Seiten des Dokuments zusammenfasst,
**dadurch gekennzeichnet,**
**dass** dieses graphische Siegel (12, 16) durch verschachtelte Strichcodes gebildet wird und Zwischenräume und Striche umfasst, die jeweils schmale oder breite Elemente bilden, die eine Information darstellen, und dadurch, dass dieses graphische Siegel sequentiell organisiert ist mittels Blöcken von n Bits und mittels Codezeilensegmenten, sich linke und rechte Markierungen am Anfang und am Ende jeder Codezeile befinden und zwischen zwei Segmenten Zwischenmarkierungen angeordnet sind.

2. Vorrichtung nach Anspruch 1, **dadurch gekennzeichnet, dass** der Sicherungsmodul in der übertragenen Binärdatei (10), die eine Seite dieses Dokuments darstellt, eine dem Siegel entsprechende graphische Codierung anbringt.

3. Vorrichtung nach Anspruch 1, **dadurch gekennzeichnet, dass** sie einen Mikrocomputer (15) umfasst, der das graphische Siegel (16) zum Zeitpunkt des Verfassens der Nachricht bzw. Mitteilung berechnet und anbringt.

4. Vorrichtung nach Anspruch 1, **dadurch gekennzeichnet, dass** sie einen gesicherten Telekopierer (18) mit einem integrierten Sicherungsmodul umfasst.

5. Vorrichtung nach Anspruch 1, **dadurch gekennzeichnet, dass** sie einen Telekopierer mit einem Sicherungsgehäuse in Serie in der Übertragungsleitung umfasst.

6. Vorrichtung nach einem der vorangehenden Ansprüche, **dadurch gekennzeichnet, dass** ein Sicherheitsmodul in den Sicherungsmodul integriert ist, um eine elektronische Signatur der Nachricht zu erhalten, integriert in die dem Siegel entsprechende graphische Codierung.

7. Vorrichtung nach Anspruch 6, **dadurch gekennzeichnet, dass** der Sicherheitsmodul einen Speicherkartenleser umfasst, der fähig ist, eine Speicherkarte zu lesen, die jeder Benutzer hat, der einen vertraulichen Code besitzt, der ermöglicht, ihn zu authentifizieren.

8. Vorrichtung nach Anspruch 1, **dadurch gekennzeichnet, dass** sie auf der Empfängerseite (B) einen Decodier- und Verifiziermodul des graphischen Siegels umfasst.

9. Verfahren zum Sichern der Übertragung eines Dokuments mit wenigstens einer Seite durch Telekopie, die folgenden Schritte umfassend:
- man berechnet ein graphisches Siegel für jede Seite des Dokuments,
- man integriert dieses Siegel in eine übertragene Seite, die entweder die genannte Seite des Dokuments ist oder eine zusätzliche "Sicherungsseite", die die graphischen Siegel aller Seiten des Dokuments zusammenfasst,
wobei dieses graphische Siegel (12;16) durch verschachtelte Strichcodes gebildet wird, bei denen die Zwischenräume sowie die Striche eine Information darstellen, diese Zwischenräume und Striche jeweils schmale oder breite Elemente darstellen und dieses graphische Siegel sequentiell mittels Blöcken von n Bits, von denen jeder einem elementaren Striche+Zwischenräume-Code entspricht, und mittels Codezeilensegmenten organisiert ist, sich linke und rechte Markierungen am Anfang und am Ende jeder Codezeile befinden und zwischen zwei Segmenten Zwischenmarkierungen angeordnet sind.

10. Verfahren nach Anspruch 9, **dadurch gekennzeichnet, dass** man die Bitmap-Datei des Dokuments direkt erhält oder aus der wiederabgetasteten Seite.

11. Verfahren nach Anspruch 9, **dadurch gekennzeichnet, dass** beim Decodieren ein morphologisches "Antigeräusch"-Filtern ermöglicht, in dem Teil der Bitmap-Datei, die dem graphischen Siegel entspricht, die Bildfehler zu eliminieren, die auf die Übertragung und/oder den Druck und/oder die Lagerung zurückzuführen sind und deren Größe strikt kleiner ist als die Größe der schmalen Elemente des Strichcodes.

12. Verfahren nach Anspruch 11, **dadurch gekennzeichnet, dass** man anschließend ein sequentielles Lesen des Siegels Zeile für Zeile und Segment für Segment durchführt, von links nach rechts, wobei die beim Erstellen des Siegels hinzugefügten Markierungen ermöglichen, die Lektüre des Siegels zu leiten.

13. Verfahren nach Anspruch 9, **dadurch gekennzeichnet, dass** das Decodieren des Siegels in zwei Schritten erfolgt: man führt eine graphische Lektüre jedes elementaren Striche+Zwischenräume-Codes durch und ordnet dann aufgrund der Wahrheitstabelle des Codes dem gelesenen elementaren Code die entsprechenden Bits zu.

14. Verfahren nach Anspruch 9, **dadurch gekennzeichnet, dass** im Falle einer unrichtigen Lektüre der elementaren Striche+Zwischenräume-Codes die intrinsische Redundanz des Codes ermöglicht, eine Mehrdeutigkeit aufzuheben und den fehlerhaften Code korrekt zu decodieren.

15. Verfahren nach Anspruch 14, **dadurch gekennzeichnet, dass** im Falle des Misslingens eine Bildverarbeitungsprozedur die theoretischen Längen der Striche oder der Zwischenräume in Abhängigkeit von den Verformungen der schmalen und breiten Elemente ermittelt bzw. bestimmt.

16. Verfahren nach Anspruch 9, **dadurch gekennzeichnet, dass** - wenn die Information über die schmalen und breiten Elemente nicht ausreicht, wenn der ermittelte bzw. festgelegte Code unmöglich ist, oder wenn ein oder mehrere Zwischenräume bzw. Striche verschwunden sind -, die Prozedur der graphischen Lektüre des Siegels den elementaren Striche+Zwischenräume-Code unbestimmt lässt, wobei der mit diesem Code verbundene Block von n Bits alle Cᵢ-Werte von 0 bis 2ⁿ-1 annehmen kann und diese Unbestimmtheit dank dem Kontrollcode aufgehoben wird, der am Ende jedes Codezeilensegments angeordnet ist.

17. Verfahren nach Anspruch 9, **dadurch gekennzeichnet, dass** man eine elektronische Signatur der Nachricht bzw. Mitteilung (M) der Telekopie-Seite benutzt, die die in der Mitteilung enthaltenen Informationen, in einer im Besitz der Ausgabeinstitution befindlichen Speicherkarte abgespeicherte geheime Elemente, einen Zufall und die Identität der Ausgabeinstitution einsetzt.

18. Verfahren nach Anspruch 17, **dadurch gekennzeichnet, dass** man die Übereinstimmung zwischen den Bits der Mitteilung und den Bits einer elektronischen Signatur verifiziert, die in die graphische Codierung integriert ist.

19. Verfahren nach Anspruch 18, **dadurch gekennzeichnet, dass** man die Übereinstimmung zwischen dem decodierten graphischen Siegel und dem im Klartext bzw. unverschlüsselt empfangenen Bild verifiziert.

20. Verfahren nach Anspruch19, **dadurch gekennzeichnet, dass** man beim Empfang im Falle einer nachträglichen Verifizierung eine "elastische" Differenz zwischen dem von dem graphischen Siegel abgeleiteten Bild und dem im Klartexte bzw. unverschlüsselt empfangenen Bild realisiert.

21. Graphischer Authentifizierungscode, gebildet durch verschachtelte Striche, bei dem die Zwischenräume wie die Striche eine Information darstellen, wobei die Zwischenräume und die Striche immer zwei Breiten aufweisen: breit oder schmal, und bei dem für jedes codierte Symbol die Anzahl der breiten Striche bzw. Zwischenräume konstant ist, **dadurch gekennzeichnet, dass** er sequentiell mittels Blöcken von n Bits, von denen jeder einem elementaren Striche+Zwischenräume-Code entspricht, und mittels Codezeilensegmenten organisiert ist, und dass sich linke und rechte Markierungen am Anfang und am Ende jeder Codezeile befinden und zwischen zwei Segmenten Zwischenmarkierungen angeordnet sind, und dadurch, dass ein Kontrollcode am Ende jeder Strichcode-Segmentzeile angeordnet ist.
